# EUROPÄISCHE PATENTSCHRIFT

(11) **EP 0 461 644 B1**
(45) Veröffentlichungstag und Bekanntmachung des Hinweises auf die Patenterteilung: **06.09.1995**
(21) Anmeldenummer: 91109664.2
(22) Anmeldetag: 12.06.1991
(51) Int. Cl.: B29C 53/08

(54) **Verfahren zum Verbiegen verformbarer bzw. verbiegbarer Rohre und Vorrichtung zu seiner Durchführung**
Method and device to bend deformable, for example bendable pipes
Méthode et appareil pour cintrer des tubes déformables, par exemple cintrables

(30) Priorität: 15.06.1990 DE 4019196
(43) Veröffentlichungstag der Anmeldung: 18.12.1991
(73) Patentinhaber: Ruppert, Hans-Peter, D-65187 Wiesbaden (DE)
(72) Erfinder: Wendorff, Ernst, W-6204 Taunusstein 4 (DE)
(74) Vertreter: Blumbach, Kramer & Partner

(56) Entgegenhaltungen:
- FR-A- 1 185 729
- FR-A- 2 254 420
- FR-E- 80 518
- GB-A- 881 854
- GB-A- 1 126 421
- US-A- 4 197 079
- PATENT ABSTRACTS OF JAPAN vol. 10, no. 257 (M-513)(2313) 3. September 1986 & JP-A- 61 84 223 (MEIJI GOMME KASEI KK ) 28. April 1986

## Beschreibung

Die Erfindung betrifft ein Verfahren zum Verbiegen von Rohren, die vorzugsweise unter Erwärmung verformbar bzw. verbiegbar sind, gemäß dem Oberbegriff nach Anspruch 1 sowie eine Vorrichtung zur Durchführung des Verfahrens gemäß dem Oberbegriff nach Anspruch 5.

Es ist bekannt, unter Erwärmung verbiegbare Rohre, vorzugsweise aus Kunststoff, zu verbiegen, wobei eine innenliegende Abstützung eingebracht wird, um eine Deformierung des Rohres, insbesondere ein Abknicken während des Biegevorganges zu vermeiden. Zu diesem Zweck wird zur inneren Abstützung beispielsweise das Rohr mit einer Sandfüllung versehen. Hierbei ist es nachteilig, daß der Sand an dem zu verbiegenden Rohr oftmals anklebt und außerdem ist nicht gewährleistet, daß der Sand das Rohr gleichmäßig an seiner Innenfläche abstützt. Des weiteren ist es bekannt, in das Innere des Rohres zur Abstützung vor dem Biegevorgang eine Schraubenfeder einzuziehen. Auch die Schraubenfeder gewährleistet nicht eine gleichmäßige Abstützung des zu verbiegenden Rohres an seiner Innenfläche und insbesondere besteht die Gefahr, daß die Schraubenfeder sich in das durch den Erwärmungsvorgang weiche Material des zu verbiegenden Rohres eindrückt, so daß unter anderem eine Entfernung der Schraubenfeder bei komplizierten Biegevorgängen unter Umständen nicht mehr möglich ist. Die bekannten Maßnahmen ermöglichen insbesondere nicht, kompliziert gegenläufige Biegungen durchzuführen, was nur mit Hilfe von Formen möglich ist.

Aus der GB-A-1 126 421 ist ein Verfahren zum Verformen von thermoplastischen Rohren bekannt. Dazu wird ein zweiteiliger Biegekörper benutzt, der ein flexibles, biegbares Metallrohr, welches den stabilen Innenkern bildet, sowie einen aufblasbaren Gummischlauch umfaßt, der das biegbare Metallrohr umgibt. Der Gummischlauch wird aufgeblasen und legt sich an der Innenseite des zu verbiegenden Rohres an. Es ist ein Nachteil eines derartigen Biegekörpers, daß der Innendruck des Gummischlauches in unerwünschter Weise entweder zu Ausbauchungen führen kann, wodurch das Auftreten von Faltenbildungen nicht unterbunden werden kann. Es besteht sogar die Gefahr, daß der das biegbare Metallrohr umgebende Gummischlauch bis zum Platzen ausgedehnt werden kann.

Aus der FR-A-22 54 420 ist ein Biegedorn zum Verformen eines Rohres offenbart. Auf dem Kern des Biegedorns ist ein aufblasbarer Schlauch wendelförmig gewickelt, der wiederum von einem elastischen Schlauch umgeben ist. Der auf dem Kern des Dorns aufgewickelte Schlauch wird aufgeblasen und drückt somit den ihn umgebenden elastischen Schlauch an die Innenwand eines zu verbiegenden Rohres. Eine stete Druckzunahme würde den elastischen Schlauch, der den Biegedorn umgibt, beliebig ausdehnen, was zu Ausbauchungen in dem Rohr führen kann, so daß bei einer unterschiedlichen Erwärmung des zu verbiegenden Rohres Faltenbildungen nicht unterbunden werden können.

Der Erfindung liegt daher die Aufgabe zugrunde, ein Verfahren und eine Vorrichtung verfügbar zu machen, die ohne Schwierigkeiten ein Verbiegen von unter Erwärmung verformbaren bzw. verbiegbaren Rohren erlauben, wobei die Gefahr einer Deformierung oder Faltenbildung bei dem Biegevorgang restlos ausgeschlossen wird, und ohne Schwierigkeiten auch gegenläufige Biegungen ohne äußere Stützformen durchgeführt werden können.

Diese Aufgabe löst die Erfindung durch die Merkmale des Verfahrensanspruches 1 sowie durch die Merkmale des Vorrichtungsanspruchs 5.

Vorteilhafte Weiterbildungen sind in den abhängigen Ansprüchen angegeben.

Die Erfindung soll nachstehend unter Bezugnahme auf die beigefügten Zeichnungen näher erläutert werden. In den Zeichnungen zeigen:
Fig. 1 ein zu verbiegendes Rohr mit Druckrohr im Schnitt,
Fig. 2 ein Druckrohr, bestehend aus Schlauch und Gewebeummantelung,
Fig. 3 ein doppelwandig ausgebildetes Druckrohr,
Fig. 4 ein gebogenes Doppelrohr,
Fig. 5 eine Rolleneinrichtung zur Verbiegung.

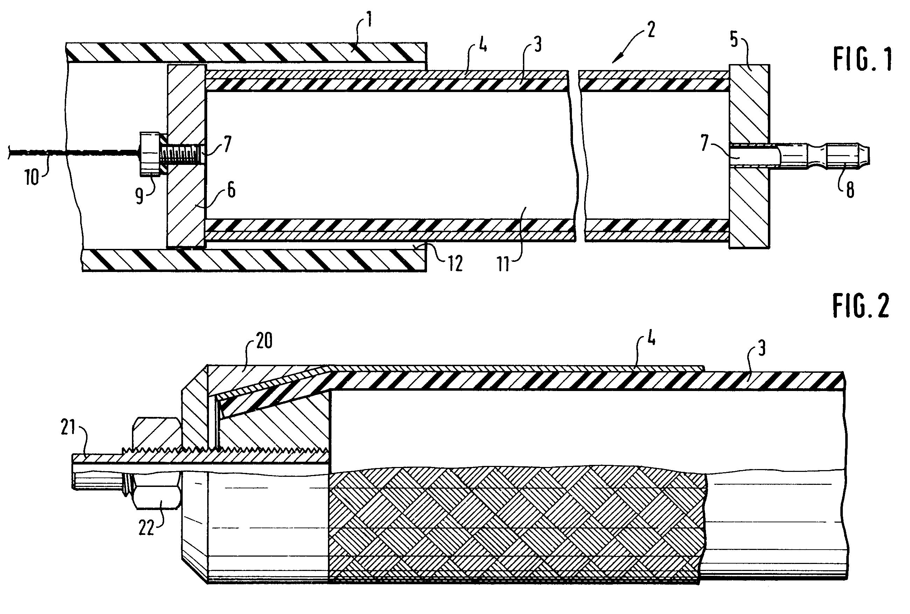

In Fig. 1 ist mit 1 ein zu verbiegendes Rohr bezeichnet, das aus Kunststoff, beispielsweise Polyethylen, bestehen kann. Grundsätzlich kann das zu verbiegende Rohr 1 aus allen Materialien bestehen, die unter Erwärmung verformbar bzw. verbiegbar sind.

In der Figur ist eine Vorrichtung 2 dargestellt, die aus einem expandierbaren Druckrohr 3 besteht, das mit einer Ummantelung 4 versehen ist. Die Ummantelung dient als Druckträger, insbesondere erforderlich, wenn höhere Drücke angewandt werden. Die Ummantelung kann aus einem Gewebe oder einer Flechtummantelung bestehen, beispielsweise einer Stahldrahtflechtung wie sie zum Schutz von Schläuchen bekannt ist. Die Flechtummantelung zeichnet sich dadurch aus, daß sie nur bis zu einem bestimmten Maß expandierbar ist.

Das Druckrohr 3 mit seiner Ummantelung 4 ist an seinen Enden mit Verschlußstücken 5 und 6 versehen. Diese sind mit Zuführungsbohrungen 7 ausgestattet, durch die ein Medium unter Druck zugeführt werden kann. Als Medium ist Luft, Wasser aber auch Dampf und Öl geeignet. Zur Zuführung des Mediums besitzt das eine Verschlußstück 5 einen Zuführstutzen 8, während das andere Verschlußstück 6 mit einem Verschlußteil 9 ausgestattet ist, daß die Zuführungsbohrung 7 verschließt. An dem Verschlußteil 9 ist ein Zugseil 10 angebracht, mit dem die Vorrichtung 2 durch das zu verbiegende Rohr 1 hindurchgezogen werden kann. Der Beginn dieses Vorganges ist in der Figur dargestellt. Dabei ist es wesentlich, daß die Verschlußstücke 5 und 6 einen Außendurchmesser aufweisen, der nicht größer als der Innendurchmesser des zu verbiegenden Rohres 1 ist. Wenn in das Innere 11 des Druckrohres 3 ein Medium unter Druck über den Zuführstutzen 8 durch die Zuführungsbohrung 7 des Verschlußstückes 5 zugeführt wird, dehnt sich das Druckrohr 3 mit seiner Umhüllung 4 nach außen aus und lehnt sich an die Innenwand 12 des zu verbiegenden Rohres an. Durch das gasförmige oder flüssige Druckmedium wird eine vollflächige Anlage des Druckrohres 3 mit seiner Umhüllung 4 an die Innenfläche 12 des zu verbiegenden Rohres erreicht, so daß bei einem Verbiegen keine Deformierung des Rohres 1 eintreten kann.

Das Druckmedium, das das Innere des Druckrohres 3 ausfüllt, kann an eine Wärmequelle angeschlossen sein, so daß die Wärme von dem Druckrohr 3 über die Ummantelung 4 auf das zu verbiegende Rohr 1 übertragen wird, nachdem das Druckrohr 3 eingeführt worden ist. Dadurch wird ein gesonderter Erwärmungsvorgang an dem zu verbiegenden Rohr 1 vermieden. Zu diesem Zweck ist es möglich, nach dem vollständigen Einführen des Druckrohres 3 in das zu verbiegende Rohr 1 das Verschlußteil 9 aus der Zuführungsbohrung 7, die eine Gewindebohrung sein kann, zu entfernen und ein nicht dargestelltes Anschlußteil anzubringen, so daß das Druckrohr von dem erhitzten Druckmedium ständig durchflossen wird, um das zu verbiegende Rohr 1 zu erwärmen.

Das Druckrohr 2 ermöglicht es, insbesondere bei der Montage an jeder Stelle den Biegevorgang ohne Schwierigkeiten durchzuführen und ohne daß eine äußere Stützform erforderlich ist. In der Regel ist ein Druck von 2 bis 3 bar als ausreichend anzusehen.

In Fig. 2 ist eine andere Art eines Druckrohres dargestellt. Die Flechtummantelung 4 und die Innenhülle 3 sind in ein Endstück 20 eingespannt, das gleichzeitig den Druckmittelkanal 21 enthält und mit Hilfe der Mutter 22 die Anbringung eines Zugseils ermöglicht. Die Innenhülle 3 in Form eines flexiblen, thermisch beständigen Schlauches wird von einem Gewebeschlauch 4 umgeben, der durch den Innendruck des flexiblen Schlauches 3 nach Zuführung eines Druckmittels durch die Druckmittelzuführung 21 bis zu einem Maß expandiert, das so gewählt ist, daß es dem Innendurchmesser des zu verbiegenden Rohres entspricht. Dies wird erreicht durch die Anordnung des Geflechts 4, das auch bei größerem Innendruck nur begrenzt expandierfähig ist.

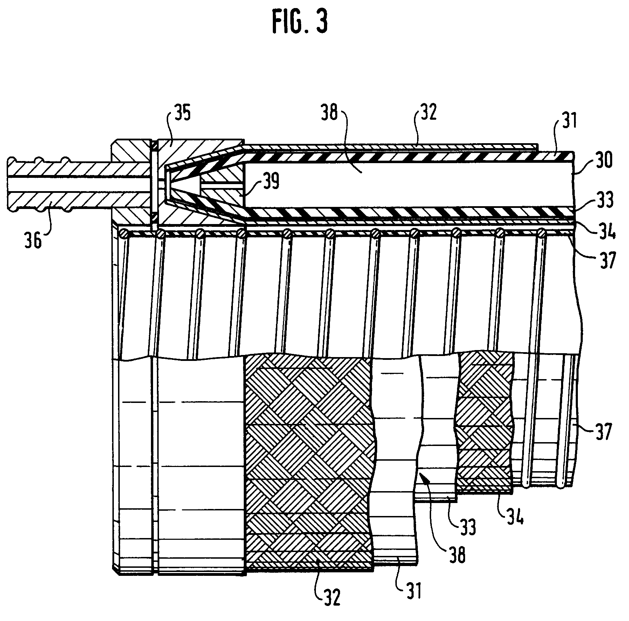

In Fig. 3 ist ein doppelwandiges Druckrohr 30 dargestellt, das aus einer äußeren Innenhülle 31 mit einer äußeren Gewebeummantelung 32 und einer innenliegenden Innenhülle 33 mit einer inneren Gewebeummantelung 34 besteht. Die äußere und die innere Umhüllung 31 bzw. 33 mit der äußeren Gewebeummantelung 32 und der inneren Gewebeummantelung 34 sind wieder in ein Endstück 35 mit innerem Klemmkonus 39 eingespannt, das mit einer Druckmittelzuführung 36 versehen ist. Die innere Ummantelung 33 mit der innenliegenden Gewebeummantelung 34 ist durch ein Stützrohr abgestützt. Wird durch die Druckmittelzuführung 36 ein Druckmedium in den von dem doppelwandigen Druckrohr 30 gebildeten Ringraum 38 zugeführt, so legt sich die äußere Gewebeummantelung 32 an die Innenwand des zu verbiegenden Rohres, das nicht dargestellt ist. Gleichzeitig kann eine Druckrohranordnung in das innere Stützrohr 37 eingebracht werden, so daß eine Doppelrohranordnung, z.B. Zu- und Abfluß, gleichzeitig verbogen werden kann. Als Stützrohr 37 kann ein flexibles Metallrohr oder Kunststoffrohr sowie eine Metallfeder eingesetzt werden.

Durch diese Anordnung, bei der das hauptsächliche Innenvolumen durch das Stützrohr 37 ausgefüllt wird, reduziert sich das Füllvolumen sehr beträchtlich, da nur noch der Ringraum 38 ausgefüllt werden muß. Damit wird der Vorteil erreicht, daß verhältnismäßig wenig Füllflüssigkeit erforderlich ist, und das Gewicht wird sehr wesentlich reduziert.

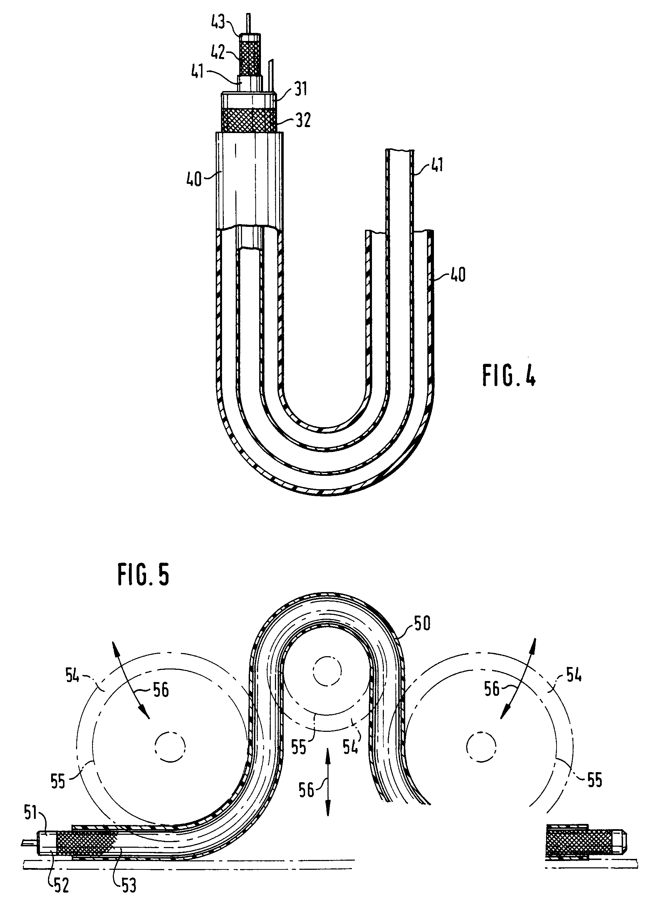

In Fig. 4 ist die Verbiegung zweier Rohre mit einem doppelwandingen Druckrohr 30 gemäß Fig. 3 dargestellt. In dem zu verbiegenden Rohr 40 schließt sich an die Innenwand die äußere Flechtummantelung 32 mit der äußeren Umhüllung 31 des doppelwandigen Druckrohres 30 an. Anstelle des Stützrohres 37 nach Fig. 1 ist ein zweites Rohr 41 eingeführt, in dem ebenfalls ein Druckrohr, bestehend aus der Flechtummantelung 42 und eine Innenhülle 43 eingeführt ist. In der beschriebenen Weise können somit gleichzeitig das Rohr 40 mit dem großen Durchmesser und das innenliegende Rohr 41 mit einem kleineren Durchmesser gebogen werden.

In Fig. 5 ist eine Einrichtung zum Verbiegen eines Rohres 50 dargestellt. In das Rohr 50 ist ein Druckrohr 51, bestehend aus einer Innenhülle 52 und einer Flechtummantelung 53 eingeführt. Die Rollen oder auch andere Formteile 54 weisen Konturen 55 auf, die dem Außenumfang des zu verbiegenden Rohres 50 entsprechen. Die Rollen bzw. Formteile 54 sind relativ zueinander bewegbar, wie durch die Pfeile 56 angedeutet ist. Auf diese Art und Weise kann mit Hilfe des eingebrachten Druckrohres eine genaue Verformung in der verschiedensten Art und Weise, abhängig von der Stellung der Formteile 54, erreicht werden.

Das Biegeverfahren zeichnet sich durch eine einfache Handhabung aus, da das Kunststoffrohr, das durch das Druckmittel von innen oder von außen erhitzt werden kann, nur auf den Innendurchmesser des Druckrohres 51 bzw. der außenliegenden Gewebeumhüllung 53 abgestützt ist, wobei der Durchmesser der Gewebeumhüllung 53 dem Innendurchmesser des zu verbiegenden Rohres entspricht. Nach dem Entspannen des Druckrohres 51 verringert sich dessen Durchmesser, so daß ein leichtes Herausziehen aus dem verbogenen Rohr 50 ermöglicht ist. Durch Druckregulierung kann der Außendurchmesser des Druckrohres 51 genau eingestellt werden. Es sind somit keine Schalen oder Vorrichtungen erforderlich, welche das zu verbiegende Rohr 50 von außen abstützen müssen. Die Länge des Druckrohres 51 kann der Länge des zu verbiegenden Rohres angepaßt werden.

Das Verfahren eignet sich nicht nur zur Herstellung vorgefertigter Teile in einer bestimmten Produktionsstätte, sondern kann auch mit Vorteil vor Ort angewandt werden.

## Patentansprüche

1. Verfahren zum Verbiegen von Rohren, die vorzugsweise unter Erwärmung verformbar bzw. verbiegbar sind, bei dem das zu verbiegende Rohr (1) gegebenenfalls erwärmt wird, eine innenliegende expandierbare Abstützung (3) eingebracht wird, die innenliegende Abstützung (3) expandiert wird und dann der Biegevorgang durchgeführt wird,
dadurch gekennzeichnet,
daß als innenliegende expandierbare Abstützung vor dem Biegevorgang eine expandierbare rohrartige Innenhülle (3) mit einer auch bei größerem Innendruck nur bis zu einem vorgegebenen Maß expandierbaren Ummantelung (4) in das zu verbiegende Rohr (1) eingebracht wird, und
daß die Innenhülle (3) mit einem unter Druck stehenden Medium ausgefüllt wird, so daß sie sich mit der Ummantelung (4) vollflächig an die Innenwand des zu verbiegenden Rohres (1) anlegt, wonach der Biegevorgang durchgeführt wird.

2. Verfahren nach Anspruch 1,
dadurch gekennzeichnet, daß als Innenhülle (3) ein expandierender Schlauch eingebracht wird.

3. Verfahren nach Anspruch 1 oder 2,
dadurch gekennzeichnet, daß als Ummantelung (4) eine Gewebe- oder Flechtummantelung, insbesondere eine Stahldrahtflechtung, mit der Innenhülle (3) in das zu verbiegende Rohr (1) eingebracht wird.

4. Verfahren nach einen der Ansprüche 1 bis 3,
dadurch gekennzeichnet, daß der Innenhülle (3) ein Medium, wie Luft, Wasser, wasserdampf oder Öl, unter Druck stehend zugeführt wird, gegebenenfalls erwärmt wird, um das zu verbiegende Rohr (1) zu erwärmen.

5. Vorrichtung zur Durchführung des Verfahrens nach einem der Ansprüche 1 bis 4, mit
einer Einrichtung (6, 9, 10) zum Einführen eines Druckrohres (3, 4) in das zu verformende Rohr (1), wobei an den Enden des Druckrohres (3, 4) Verschlußstücke (5, 6) angebracht sind, deren Außendurchmesser nicht größer als der Innendurchmesser (12) des zu verbiegenden Rohres (1) ist,
dadurch gekennzeichnet,
daß das Druckrohr aus einer expandierbaren Innenhülle (3) und diese umgebenden, auch bei größerem Innendruck nur bis zu einem vorgegebenen Maß expandierbaren Ummantelung (4) besteht und flexibel ist und unter Druck nach außen bis zu dem vorgegebenen Maß expandierbar ist.

6. Vorrichtung nach Anspruch 5,
dadurch gekennzeichnet, daß an den Verschlußstücken (5, 6) Zuführungsbohrungen (7) für ein Medium unter Druck vorgesehen sind.

7. Vorrichtung nach Anspruch 5 oder 6,
dadurch gekennzeichnet, daß eine Zuführungsbohrung (7) mit einem Verschlußteil (9) versehen ist, an dem ein Zugseil (10) befestigt ist.

8. Vorrichtung nach einem der Ansprüche 5 bis 7,
dadurch gekennzeichnet,
daß eine Einrichtung ein doppelwandiges Druckrohr (30) einführt, bei dem zwischen den Wänden (31, 33) ein Ringraum (38) ausgebildet ist und
daß die Innenwand (34) des Druckrohres (30) durch einen flexiblen Stützschlauch (37) abgestützt ist.

9. Vorrichtung nach Anspruch 8,
dadurch gekennzeichnet, daß der innenliegende Stützschlauch (37) durch ein zweites zu verformendes Rohr (41) mit innenliegendem Druckrohr, bestehend aus Innenhülle (43) und einer Gewebeummantelung (42) ersetzt ist.

10. Vorrichtung nach einem der Ansprüche 5 bis 9,
dadurch gekennzeichnet, daß eine Einrichtung mit relativ zueinander bewegbaren Rollen bzw. Formteilen (54) vorgesehen ist, die dem zu verbiegenden Rohr (50) entsprechende Konturen (55) aufweisen.

## Claims

1. A method of bending pipes which are preferably deformable or bendable when heated, in which the pipe (1) for bending is optionally heated, an internal expandible support (3) is inserted, the internal support (3) is expanded and the bending operation is then carried out, characterised in that the internal expandible support is an expandible tubular inner sheath (3) with a jacket (4) which is expandible only up to a given extent even under high internal pressure, and which is inserted into the pipe (1) before the bending operation, and the inner sheath (3) is filled with a medium under pressure so that the jacket (4) engages the entire surface of the inner wall of the pipe (1) for bending, after which the bending operation is carried out.

2. A method according to claim 1, characterised in that the inner sheath (3) is an expandible flexible tube.

3. A method according to claim 1 or 2, characterised in that the jacket (4) is a fabric or braided jacket, more particularly of braided steel wire, inserted with the inner sheath (3) into the pipe (1) for bending.

4. A method according to any of claims 1 to 3, characterised in that a medium such as air, water, water-vapour or oil under pressure is supplied to the inner sheath (3) and optionally heated in order to heat the pipe (1) for bending.

5. A device for working the method according to any of claims 1 to 4, comprising a means (6, 9, 10) for inserting a pressure pipe (3, 4) into the pipe (1) to be deformed, closure members (5, 6) being disposed at the ends of the pressure pipe (3, 4) and having an outside diameter not larger than the inside diameter (12) of the pipe (1) for bending, characterised in that the pressure pipe comprises an expandible inner sheath (3) surrounded by a jacket (4) which is expandible only to a preset amount even under high internal pressure and is flexible and is expandible outwards under pressure up to the preset extent.

6. A device according to claim 5, characterised in that bores (7) for supplying a medium under pressure are provided on the closure members (5, 6).

7. A device according to claim 5 or 6, characterised in that a bore (7) is provided with a closure part (9) to which a tension cable (10) is fastened.

8. A device according to any of claims 5 to 7, characterised in that one means inserts a double-walled pressure pipe (30), having walls (31, 33) between which an annular space (38) is formed, and the inner wall (34) of the pressure pipe (30) is supported by a flexible tube (37).

9. A device according to claim 8, characterised in that the internal supporting flexible tube (37) is replaced by a second pipe (41) for deformation and having an internal pressure pipe comprising an inner sheath (43) and a fabric jacket (42).

10. A device according to any of claims 5 to 9, characterised in that one means is provided with rollers or mouldings (54) movable relatively to one another and having contours (55) corresponding to the pipe (50) for bending.

## Revendications

1. Procédé pour cintrer des tubes qui sont déformables et cintrables de préférence sous échauffement, où le tube (1) à cintrer est éventuellement réchauffé, un support (3) intérieur expansible est mis en place, le support intérieur est expansé et l'opération de cintrage est effectuée, caractérisé
en ce que, en guise de support intérieur expansible et avant l'opération de cintrage, une gaine intérieure (3) expansible et tubulaire est mise en place dans le tube (1) à cintrer avec une enveloppe (4) expansible seulement jusqu'à un certain degré prédéfini même avec une pression interne assez élevée, et en ce que la gaine intérieure (3) est remplie d'un agent sous pression, de sorte qu'elle s'applique avec l'enveloppe (4) sur toute la surface de la paroi interne du tube (1) à cintrer, après quoi on procède à l'opération de cintrage.

2. Procédé selon la revendication 1, caractérisé en ce qu'un tuyau expansible est mis en place en guise de gaine intérieure (3).

3. Procédé selon la revendication 1 ou 2, caractérisé en ce que, en guise d'enveloppe (4), on place une enveloppe de textile ou une enveloppe de treillis, notamment un treillis en fil d'acier, avec la gaine intérieure (3) dans le tube (1) à cintrer.

4. Procédé selon l'une quelconque des revendications 1 à 3, caractérisé en ce qu'un agent tel que l'air, l'eau, la vapeur d'eau ou l'huile, sous pression est amené à la gaine intérieure (3), et est éventuellement réchauffé pour réchauffer le tube (1) à cintrer.

5. Appareil pour la mise en oeuvre du procédé selon l'une quelconque des revendications 1 à 4, avec un dispositif (6, 9, 10) pour introduire un tube de pression (3, 4) dans le tube (1) à déformer, des organes d'obturation (5, 6) étant disposés aux extrémités du tube de pression (3, 4), organes dont le diamètre extérieur n'est pas supérieur au diamètre intérieur (12) du tube (1) à cintrer, caractérisé en ce que le tube de pression comprend une gaine intérieure (3) expansible et cette enveloppe (4) périphérique, expansible seulement jusqu'à un certain degré prédéfini même avec une pression intérieure assez élevée, est flexible et est expansible sous pression vers l'extérieur jusqu'au degré prédéfini.

6. Appareil selon la revendication 5, caractérisé en ce que des alésages d'admission (7) sont prévus sur les organes d'obturation (5, 6) pour un agent sous pression.

7. Appareil selon la revendication 5 ou 6, caractérisé en ce qu'un alésage d'admission (7) est muni d'une pièce d'obturation (9) sur laquelle est fixé un câble tracteur (10).

8. Appareil selon l'une quelconque des revendications 5 à 7, caractérisé en ce qu'un dispositif introduit un tube de pression (30) à double paroi sur lequel un espace annulaire (38) est formé entre les parois (31, 33) et en ce que
la paroi interne (34) du tube de pression (30) est soutenue par un tuyau support (37) flexible.

9. Appareil selon la revendication 8, caractérisé en le tuyau support (37) intérieur est remplacé par un deuxième tube (41) à déformer avec tube de pression intérieur comprenant une gaine interne (43) et une enveloppe de textile (42).

10. Appareil selon l'une quelconque des revendications 5 à 9, caractérisé en ce qu'un dispositif est prévu avec des roulettes et des pièces moulées (54) mobiles les unes par rapport aux autres qui présentent des contours adaptés au tube (50) à cintrer.
